**Europäisches Patentamt**

**European Patent Office**

**Office européen des brevets**

(11) Veröffentlichungsnummer: **0 550 512 B1**

## (12) EUROPÄISCHE PATENTSCHRIFT

(45) Veröffentlichungstag der Patentschrift: **27.12.95**

(51) Int. Cl.⁶: **B60T 8/00**, B60T 8/58

(21) Anmeldenummer: **91916566.2**

(22) Anmeldetag: **26.09.91**

(86) Internationale Anmeldenummer:
**PCT/EP91/01839**

(87) Internationale Veröffentlichungsnummer:
**WO 92/05985 (16.04.92 92/09)**

(54) **ANTRIEBSSCHLUPFREGELSYSTEM**

(30) Priorität: **29.09.90 DE 4030881**

(43) Veröffentlichungstag der Anmeldung:
**14.07.93 Patentblatt 93/28**

(45) Bekanntmachung des Hinweises auf die
Patenterteilung:
**27.12.95 Patentblatt 95/52**

(84) Benannte Vertragsstaaten:
**DE FR GB**

(56) Entgegenhaltungen:
**WO-A-85/02590**
**WO-A-87/02948**
**WO-A-91/08935**

**PATENT ABSTRACTS OF JAPAN vol. 11, no.
111 (M-578)9. Mai 1985, & JP-A-61 257 332
(JAPAN ELECTRONIC CONTROL SYSTEM CO
LTD) 14 November 1986**

(73) Patentinhaber: **ROBERT BOSCH GMBH**
**Postfach 30 02 20**
**D-70442 Stuttgart (DE)**

(72) Erfinder: **BARTH, Günter**
**Thomas-Mann-Str. 34**
**D-7015 Korntal 2 (DE)**
Erfinder: **MAIER, Rolf**
**Mozartstr. 3**
**D-7053 Kernen (DE)**

## Beschreibung

Stand der Technik

Antriebsschlupfregelsysteme bekannter Art mit starrem Differential (z.B. WO87/02948, WO90/06251) lassen sich durch die folgenden Differentialgleichungen beschreiben

$$\dot{\omega}_l = V1 \cdot (MBl-MSl) - V2 (MBr - MSr) + V3 \cdot MM$$
$$\dot{\omega}_r = -V2 (MBl - MSl) + V1 (MBr - MSr) + V3 \cdot MM$$

Hierin bedeuten:
V1, V2 und V3
→ Konstante V1 > V2 und von Gang abhängig
MBl, MBr
→ Bremsmoment links, rechts
MSl, MSr
→ Moment der Straße durch Schlupfkurve links, rechts
MM
→ Motormoment
$\omega_l$, $\omega_r$
→ Raddrehzahlen links, rechts
Hier sind die beiden Regelgrößen über V2 miteinander verkoppelt.

Vorteile der Erfindung

Wenn man, wie dies bei der Erfindung getan wird, den Drallsatz für den starren Antriebsstrang mit Differential mit dem Freiheitsgraden $(\omega_r + \omega_l) = \omega_s$ und $(\omega_r - \omega_l) = \omega_D$ aufstellt, so erhält man: aufstellt, so erhält man:

$$(Jm + 2 Jr) \cdot \dot{\omega}_s = MSl + MSr - (MBl + MBr) + MM$$
$$2 Jr \cdot \dot{\omega}_D = MSl - MSr - (MBl - MBr)$$

Man erkennt, daß hier keine Verkopplung mehr besteht; man erhält die voneinander unabhängigen Steuereingriffe (MBl + MBr) und (MBl - MBr).

Jm bzw. Jr sind die Trägheitsmomente des Motors bzw. des Rads.

Da der Antriebsstrang jedoch nicht starr ist, müssen noch die Elastizitäten des Strangs berücksichtigt werden, was durch eine gedachte Ersatzelastizität zwischen Motor und Rädern berücksichtigt wird.

Hieraus resultieren die drei parallel und unabhängig voneinander arbeitenden Regler, von denen der eine die Drehzahldifferenz, der zweite die Drehzahlsumme und der dritte die Motordrehzahl in der Regelgröße verarbeitet. Der erste und der zweite Regler haben neben einem Proportionalanteil noch einen Integralanteil, während für den dritten Regler ein Proportionalverhalten ausreichend ist. Die Regler geben Signale ab die Radmomenten MB entsprechen und als Bremsmomente realisiert werden.

Das Regelverhalten des ersten Reglers kann man wie folgt beschreiben:

$$MB1 = I_1 + KP_1 \cdot (\omega_r - \omega_l) .$$

$I_1$ ist der Integralanteil, der seinerseits ebenfalls noch von $\omega_D$ abhängig ist. $I_1$ kann wie folgt dargestellt werden

$$I_1 = I_{1n} = \sum_{i=1}^{n} \left\{ (-fi)_i \cdot K_{I1} \cdot \omega_{D_i} \right\}$$

Hierin stellt fi einen Verlustterm dar, der normalerweise nicht wirksam ist, d.h. fi = 1, jedoch unter bestimmten Bedingungen, die später erläutert werden, anwachsen kann.

Günstiger ist es $\omega_D$ wie folgt zu definieren

$$\omega_D = (\omega_l - \omega_{Refl}) - (\omega_r - \omega_{Refr}).$$

Hierin ist $w_{Ref}$ die freilaufende Radgeschwindigkeit des betreffenden Rads, die man gemäß Patentanmeldung P 40 24 815.1 errechnen kann.

Das Regelverhalten des zweiten Reglers läßt sich wie folgt beschreiben

$$MB2 = I_2 + KP_2 \cdot \omega_2 + \text{Motorregler Kopplungsmomert,}$$

wobei

$\omega_2$ entweder $\omega_{Soll} - (\omega_l + \omega_r)$ oder $\omega_{Soll} - [(\omega_l - \omega_{Refl}) + (\omega_r - \omega_{Refr})]$ sein kann.

Unterschiedliche Solldrehzahlen (Sollschlüpfe) wirken sich bei MB2 im Betrag und bei MB1 ggf. im Vorzeichen aus.

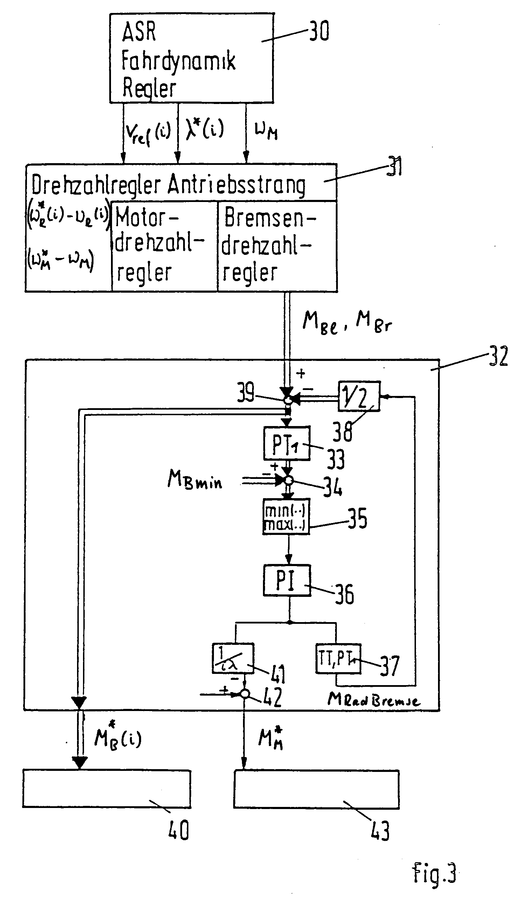

Das Motorregler Kopplungsmoment erhält man aus dem Sollbremsmoment der Bremsenregler, welches zunächst gefiltert wird, dann ein PI-Glied mit einem stationären Sollbremsdruck MB__min als Sollwert und am Ausgang ein weiteres Filter mit Totzeitglied durchläuft (siehe Fig. 3). Der Übergang von zwei Stellgrößen auf eine Stellgröße erfolgt in unten beschriebener, nichtlinearer Weise (Fig. 3 in Block 35).

$I_2$ ist selbst wieder von $\omega_2$ abhängig und lautet:

$$I_2 = I_{2n} = \sum_{i=1}^{n} \left\{ KI_2 \cdot \omega_{2i} \right\}$$

Das Regelverhalten das dritten Reglers (Dämpfungsreglers) wird wie folgt beschrieben:

$MB_3 = KP_3 \cdot \omega_3$, wobei $\omega_3 = \omega_M /ig - \omega_2$ ist; $\omega_M$ ist die Motordrehzahl, ig die Getriebeübersetzung und $KP_3$ die Reglerverstärkung.

Die Erfindung ist insbesondere dort von Interesse, wo ein überlagerter Regler unter Berücksichtigung der Fahrzeugdynamik unterschiedliche und sich ändernde Sollschlüpfe und damit Solldruckzahlen vorgibt.

Bei der erfindungsgemäßen Lösung läßt sich das überlagerte ASR-Konzept leichter austauschen (leichtere Anpassung).

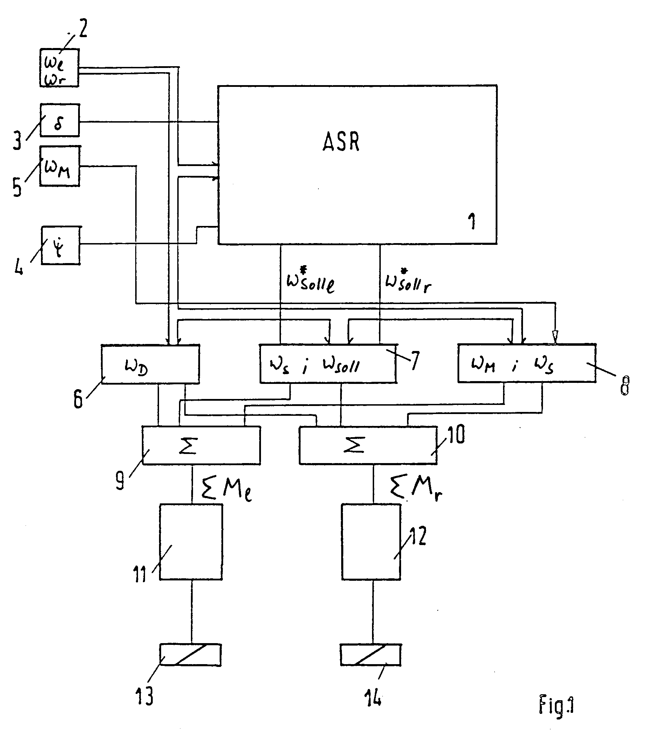

Anhand des Ausführungsbeispiels der Fig. 1 der Zeichnung wird die Erfindung näher erläutert. Dort ist mit 1 ein ASR dargestellt, dem die von Sensoren 2, 3 und 4 z.B. die Raddrehzahlen $\omega_l$ und $\omega_r$ der angetriebenen Räder, der Lenkwinkel $\delta$ und die Giergeschwindigkeit $\psi$ zugeführt werden. Von diesem Regler 1 ist hier nur wichtig, daß er aus den zugeführten Sensorsignalen Sollbremsschlupfwerte $\lambda^*$ oder Solldrehzahlen $\omega_{Soll}$ für die angetriebenen Räder abgibt, die neben einer Verminderung des Antriebsschlupfs eine Stabilisierung des Fahrzeugs bewirken sollen.

Die Raddrehzahlen $\omega_l$ und $\omega_r$ werden auch Reglern 6, 7 und 8 zugeführt. Den Reglern 6 und 7 werden noch die Solldrehzahlen $\omega_{Soll}$ und dem Regler 8 die von einem Sensor 5 abgeleitete Motordrehzahl zugeführt. Der Regler 6 erzeugt an seinen Ausgängen Momenten + MB1 und - MB1 entsprechende Signale, die Regler 7 und 8 auf beiden Ausgängen gleichen Momenten entsprechende Signale.

Diese Signale werden in Blöcken 9 und 10 für die beiden Wagenseiten addiert. Die entstehenden Signale entsprechen dem an den Rädern aufzubringenden Bremsmoment MBl und MBr. Blöcke 11 und 12 wandeln diese Signale in Ansteuerzeiten T für Ventile 13 und 14 um. Hierzu muß auch der Bremsdruck errechnet werden. Das Vorgehen ist in der Patentanmeldung P ............(Anlage B) näher beschrieben.

Der Regler 6 der Fig. 1, der mit der Differenz $\omega_D$ regelt, ist z.B. als Synchronisierungsregler wirksam, d.h. er gleicht die Raddrehzahlen aneinander an, und bewirkt somit eine elektronische Sperre zwischen den angetriebenen Rädern. Bei einem Wechsel von $\mu$-Split, in welcher Situation die Sperrwirkung benötigt wird, auf beidseitig hohes $\mu$, in welcher Situation eine Sperrwirkung nicht mehr gebraucht wird, bleibt der einseitige Bremseneingriff wegen des I-Anteils im Regler noch einige Zeit erhalten, was für den Fahrer unangenehm spürbar ist.

Es wird deshalb in diesem Fall der oben erwähnte Verlustterm fi wirksam gemacht, der die Sperrwirkung mindert. Vorzugsweise ist die Minderung abhängig von der Schlupfgröße oder noch besser von der der Steigung der Schlupfkurve bei diesem Schlupf. Durch den Verlustterm wird der Integrator zu einem Verzögerunsglied erster Ordnung.

Der Verlustterm ist nur wirksam, wenn beide Antriebsräder betragsmäßig eine niedrig liegende Schlupfschwelle $\lambda_k$ unterschreiten.

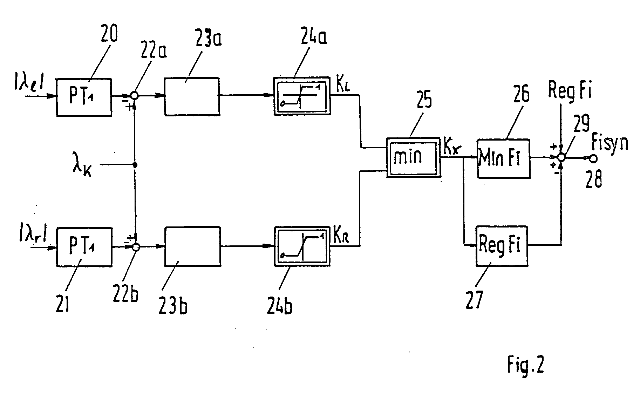

Ein Blockschaltbild hierzu zeigt Fig. 2. Dort werden die Schlupfwerte für beide angetriebenen Räder $\lambda_l$ und $\lambda_r$ über Filter 20 und 21 Summationsstellen zugeführt die die Differenz einer Schlupfschwelle $\lambda_K$ mit den Schlupfwerten der Antriebsräder $\lambda_l$ und $\lambda_r$ bilden. In 23a und 23b wird durch Multiplikation mit $1/\lambda_k$ eine Normierung durchgeführt und die erhaltene Zahl in 24a und 24b zwischen 0 und 1 begrenzt. Aus beiden Werten wird der kleinere in 25 als kx ausgewählt und mit MinFi in 26 und RegFi in 27 multipliziert. In der Summationsstelle 29 wird zu RegFi das Ergebnis von 26 addiert und von 27 subtrahiert. Als Ergebnis erhält man den Verlustterm fi.

Die oben erwähnte Kopplung durch die Schlupfkurve ist bei $\lambda = 0$ am stärksten.

Der bis jetzt dargestellte Gesamtregler erzeugt lediglich eine Stellgröße pro Fahrzeugseite, die zur Bremsdrucksteuerung benützt werden kann.

Man kann nun gemäß einer Weiterbildung der Erfindung die ermittelten Bremsmomente MBl und MBr mit Filter in einen langsamen und einen schnellen Anteil aufspalten und nur den schnellen Anteil zur Bremsmomentensteuerung benutzen. Der langsame Anteil wird zur Motorsteuerung benutzt.

Anhand der Fig. 3 soll dies näher erläutert werden. Hier entspricht ein Block 30 dem Block 1 plus den Sensoren 2-4 und der Block 31 dem Blöcken 6 bis 10. Es werden Sollbremsmomente MBl und MBr als Summen von Momenten ausgegeben. Von einem Tiefpaßfilter 33 wird für jede Seite nur der langsame Teil durchgelassen, der in einem Differenzbildner 34 mit einem Minimalmoment MB min verglichen wird.

Je ein Signal, das der Differenz entspricht, wird ausgegeben, wenn der Betrag des gefilterten Anteils größer als das Minimalmoment MB_min ist. Der anschliessende Block 35 wählt je nach Ansteuerung von außen, den größeren oder kleineren Wert von den beiden zugeführten Werten aus. Eine select hi Funktion erhält man, wenn man das Bremsmoment des schwächer gebremsten Rades als größtes Eingangsmoment in den PI-Regler zuläßt.

Select lo hat als Eingangsmoment das Moment des stärker abgebremsten Rades. Ein besonderer Vorteil des in Fig. 3 dargestellten Algorithmus besteht darin, daß nicht nur Strategien wie select lo oder select hi gefahren werden können, sondern auch gezielt ein bestimmtes Differenzmoment rechts/links als Grenzwert (vorgegeben z.B. von einem überlagerten Regler) eingestellt werden kann.

Dazu wird ausgehend von der select hi Einstellung das kleinere Bremsmoment als Eingangsmoment des PI-Reglers verwendet, bis zwischen dem kleinsten und größten Bremsmoment der zulässige Betrag überschritten ist und dann das größere Bremsmoment minus zulässigem Differenzmomentenbetrag als Eingangsmoment verwendet wird. Wenn das Differenzmoment gegen null geht, erhält man die select-lo Auslegung. Man erkennt, daß je nach Größe des zulässigen Differenzmomentes eine stufenlose Einstellung von select lo bis select hi auf einfache Weise möglich ist. Die Ansteuerung erfolgt vom übergeordneten Regler 30, der z.B. aus Lenkwinkel, Fahrzeuggeschwindigkeit und Fahrpedalstellung Sollwerte für z.B. die Giergeschwindigkeit errechnet und im Vergleich mit der z.B. aus den Radsignalen abgeleiteten Giergeschwindigkeit Sollmomente oder Sollschlupfwerte an den Rädern berechnet.

Die Summationsstelle 34 bedeutet einen Soll-/Istwertvergleich vom Sollbremsmoment MB__min mit dem stationären (gefilterten) Bremsmoment. Ein PI-Regler 36 soll das Bremsmoment auf diesen Wert einstellen. Nach einem Tiefpaß und Totzeitglied 37 wird das berechnete Bremsmoment in 38 zu gleichen Teilen auf die Räder verteilt und in der Summationsstelle 39 von dem zunächst berechneten Bremsmoment subtrahiert.

Das nach Block 36 anstehende Bremsmoment wird nach Division durch die Getriebeübersetzung ig in 41 in ein äquivalentes Motormoment umgerechnet, um das in 42 das aktuelle Motormoment reduziert wird.

Das Ergebnis ist das durch eine Motorsteuerung umzusetzende Sollmotormoment MM*, das der Block 43 über ein Kennlinienfeld einstellt.

Die Dynamik der Regelung wird durch das Filter 33 am Eingang bestimmt. Die durch den Block 37 bewirkte langsame Rückkoppelung soll sicherstellen, daß Störungen klein bleiben und der Bremsregler vom Motoreingriff entkoppelt ist.

Die Auswirkung der Fehler im Motordynamikmodell werden durch das PT1-Führungsgrößenfilter 39 am Eingang klein gehalten. Umgekehrt gilt: je genauer Motor und Bremsen modelliert sind, umso schneller kann die Kopplung vonstatten gehen.

Das oben erläuterte Prinzip der Momentenaufteilung auf Motor und Bremse kann auch bei anders als oben beschriebenen ausgelegten Momentenreglern zur Anwendung kommen.

| | |
|---|---|
| ig | Gesamtübersetzung des Antriebssranges |
| Jm | Trägheitsmoment des Motors |
| Jr | Trägheitsmoment eines Rades |
| MBl | Bremsmoment, linkes Antriebsrad |
| MBr | Bremsmoment, rechtes Antriebsrad |
| MM* | Soll-Motormoment |
| MB(i) | Soll-Radmoment |
| MSl | Moment der Straße durch Schlupfkurve, links |
| MSr | Moment der Straße durch Schlupfkurve, rechts |
| vref(i) | Freilaufende Radgeschwindigkeiten (Referenzgeschwindigkeiten) |
| $\alpha DK$ | Drosselklappenwinkel |
| $\alpha DK,MESS$ | gemessener Drosselklappenwinkel |
| $\lambda$ | Schlupf |
| $\lambda_l$ | Schlupf, am Antriebsrad links |
| $\lambda_r$ | Schlupf, am Antriebsrad rechts |
| $\omega_{(i)}$ | Raddrehzahl, [rad/s] |
| $\omega_l$ | Raddrehzahl, links [rad/s] |
| $\omega_r$ | Raddrehzahl, rechts [rad/s] |
| $\omega_M$ | Motordrehzahl [rad/s] |
| $\omega_M^*$ | Soll-Motordrehzahl [rad/s] |
| $\omega_R^*$ | Soll-Raddrehzahl [rad/s] |
| $\omega_{Ref}$ l,r | freilaufende Radgeschwindigkeit links, rechts [rad/s] |
| $\omega_{Soll}$ | Soll-Raddrehzahl (Sollschlupf) |

**Patentansprüche**

1. Antriebsschlupfregelsystem für ein Kraftfahrzeug, bei dem Solldrehzahlen für die einzelnen angetriebenen Räder vorgegeben werden und aus den Abweichungen der gemessenen Raddrehzahlen hiervon Bremsdrucksteuersignale für eine Bremshydraulik ermittelt werden, dadurch gekennzeichnet, daß

   - mittels eines ersten Regelverstärkers (6) mit einem Proportional- und einem Integralanteil ein erster Bremsmomentenwert (MB1) ermittelt wird durch Regelung der Differenz der Raddrehzahlen der angetriebenen Räder ($\omega l - \omega r$) auf einen vorgegebenen Sollwert ($\omega refl - \omega refr$),

   - wobei der ermittelte erste Bremsmomentenwert (MB1) mit unterschiedlichem Vorzeichen den beiden Radbremsen zugeordnet wird,

   - daß mittels eines zweiten Regelverstärkers (7) mit einem Proportional- und einem Integralanteil ein zweiter Bremsmomentenwert (MB2) für die beiden Räder ermittelt wird durch Regelung der Summe der Drehzahlen der angetriebenen Räder ($\omega l + \omega r$) auf einen vorgegebenen Sollwert ($\omega soll$),

   - wobei für jede der beiden Radbremsen die ermittelten Bremsmomente (MB1, MB2) addiert werden (9, 10) und in Ansteuerzeiten für die den beiden Rädern zugeordneten Bremsdrucksteuerventile umgesetzt werden.

2. Antriebsschlupfregelsystem nach Anspruch 1, dadurch gekennzeichnet, daß mittels eines dritten Regelverstärkers mit einem Proportionalanteil mit Hilfe der Differenz der getriebebozogenen Motordrehzahl und der Summendrehzahl der angetriebenen Räder ($\omega_M$ -($\omega_l$ + $\omega_r$)) ein Bremsmoment MB3 für die beiden Räder ermittelt wird, und daß dieses Bremsmoment MB3 zu den genannten Summen $\Sigma$MB(i) addiert wird.

3. Antriebsschlupfregelsystem nach Anspruch 1 oder 2, dadurch gekennzeichnet, daß die Solldrehzahlen ($\omega_{soll}$) durch einen überlagerten Regler unterschiedlich vorgegeben werden.

4. Antriebsschlupfregelsystem nach Anspruch 3, dadurch gekennzeichnet, daß der überlagerte Regler ein Fahrdynamikregler für den ASR-Betrieb ist.

5. Antriebsschlupfregelsystem nach einem der Ansprüche 1-4, dadurch gekennzeichnet, daß die parallel arbeitenden Regler Regler höherer Ordnung sind.

6. Antriebsschlupfregelsystem nach einem der Ansprüche 1-5, dadurch gekennzeichnet, daß bei beidseitig kleinem Radschlupf im ersten Regler ein Verlustterm wirksam wird, der den Integralanteil vermindert und damit die Sperrwirkung durch den Regler herabsetzt.

7. Antriebsschlupfregelsystem nach einem der Ansprüche 1 bis 6, dadurch gekennzeichnet, daß die ermittelten Bremsmomente $\Sigma$MB(i) für beide Fahrzeugseiten mittels Filtermittel in einem schnellen und einen langsamen Anteil aufgespalten werden, daß nur der schnelle Anteil zur Bremsmomentenregelung benutzt wird und daß der langsame Anteil zur Motormomentensteuerung ausgenutzt wird.

**Claims**

1. Drive-slip control system for a motor vehicle, in which desired speeds for the individual driven wheels are predetermined and brake-pressure control signals for brake hydraulics are determined from the deviations of the measured wheel speeds from these, characterised in that,
   - by means of a first control amplifier (6) with a proportional component and an integral component, there is determined a first braking-torque value (MB1) by controlling the difference of the wheel speeds of the driven wheels ($\omega_l$ - $\omega_r$) to a predetermined desired value ($\omega_{refl}$ - $\omega_{refr}$),
   - the determined first braking-torque value (MB1) being assigned a different sign to the two wheel brakes,
   - in that, by means of a second control amplifier (7) with a proportional component and an integral component, there is determined a second braking- torque value (MB2) for the two wheels by controlling the sum of the speeds of the driven wheels ($\omega_l$ - $\omega_r$) to a predetermined desired value ($\omega$soll),
   - for each of the two wheel brakes the determined braking torques (MB1, MB2) being added (9,10) and being converted into control times for the brake-pressure control valves assigned to the two wheels.

2. Drive-slip control system according to Claim 1, characterised in that, by means of a third control amplifier with a proportional component, a braking torque MB3 for the two wheels is determined by means of the difference between the transmission-related engine speed and the total speed of the driven wheels ($\omega_M$ -($\omega_l$ + $\omega_r$)), and in that this braking torque MB3 is added to the said sums $\Sigma$MB(i).

3. Drive-slip control system according to Claim 1 or 2, characterised in that the desired speeds ($\omega$soll) are predetermined differently by an overriding controller.

4. Drive-slip control system according to Claim 3, characterised in that the overriding controller is a driving-dynamics controller for the ASR mode.

5. Drive-slip control system according to one of Claims 1 - 4, characterised in that the controllers working in parallel are controllers of a higher order.

6. Drive-slip control system according to one of Claims 1 - 5, characterised in that, with a small wheel slip on both sides, a loss term is activated in the first controller, reduces the integral component and consequently decreases the barrier effect by the controller.

7. Drive-slip control system according to one of Claims 1 to 6, characterised in that the braking torques $\Sigma$MB(i) determined for the two sides of the vehicle are divided by filter means into a fast fraction and a slow fraction, in that only the fast fraction is used for regulating the braking torque, and in that the slow fraction is used for controlling the engine torque.

**Revendications**

1. Système de régulation de glissement à l'entraînement pour un véhicule, où on prédéfinit des vitesses de rotation de consigne pour les différentes roues motrices et on détecte à partir des écarts des vitesses de rotation des roues mesurées des signaux de commande de freinage pour un circuit hydraulique de freinage, caractérisé en ce que :
   - au moyen d'un premier amplificateur de régulation (6), on détermine avec une fraction proportionnelle et une fraction intégrale une première valeur de couple de freinage (MBI) en régulant la différence des vitesses de rotation des roues motrices ($\omega_l$-$\omega_r$) sur une valeur de consigne prédéfinie ($\omega_{refl}$-$\omega_{refr}$),
   - on associe aux deux freins de roue la première valeur détectée de couple de freinage (MB1) avec un signe différent,
   - au moyen d'un second amplificateur de régulation (7), on détermine avec une fraction proportionnelle et une fraction intégrale une seconde valeur de couple de freinage (MB2) pour les deux roues en régulant la somme des vitesses de rotation des roues motrices ($\omega_l + \omega_r$) sur une valeur prédéfinie ($\omega_{soll}$),
   - pour chacun des deux freins de roue, on additionne (9, 10) les couples de freinage déterminées (MB1, MB2) et on les convertit en temps de commande par les deux soupapes de commande des pressions de freinage associées aux deux roues.

2. Système de régulation de glissement à l'entraînement selon la revendication 1, caractérisé en ce qu'au moyen d'un troisième amplificateur de régulation, on détermine avec une fraction proportionnelle à l'aide de la différence de la vitesse de rotation du moteur en tenant compte de la transmission et de la somme des vitesses de rotation des roues motrices ($\omega_M$ - ($\omega_l + \omega_r$)) un couple de freinage (MB3) pour les deux roues, et on additionne ce couple de freinage (MB3) avec les sommes mentionnées $\Sigma MB(i)$.

3. Système de régulation de glissement à l'entraînement selon la revendication, 1 ou 2, caractérisé en ce que les vitesses de rotation de consigne ($\omega_{soll}$) sont prédéfinies par un régulateur superposé de façon différente.

4. Système de régulation de glissement à l'entraînement selon la revendication 3, caractérisé en ce que le régulateur est un régulateur dynamique de marche pour le fonctionnement de système de régulation de glissement a l'entraînement.

5. Système de régulation de glissement à l'entraînement selon l'une des revendications 1 à 4, caractérisé en ce que les régulateurs qui fonctionnent en parallèle sont des régulateurs d'ordre plus élevé.

6. Système de régulation de glissement à l'entraînement selon l'une des revendications 1 à 5, caractérisé en ce que dans le cas d'un petit glissement de roue des deux côtés, on rend opérationnel dans le premier régulateur un terme de perte, qui réduit la fraction intégrale et de cette façon fait diminuer par le régulateur l'effet de blocage.

7. Système de régulation de glissement à l'entraînement selon l'une des revendications 1 à 6, caractérisé en que les couples de freinage déterminés $\Sigma MB(i)$ pour les deux côtés du véhicule sont divisés au moyen d'un filtre en une fraction rapide et une fraction lente, en ce que l'on utilise seulement la fraction rapide pour la régulation du couple de freinage et en ce qu'on utilise la fraction lente pour la commande du couple moteur.

Fig.1

Fig.2

Fig.3